Europäisches Patentamt

European Patent Office

Office européen des brevets

(11) Veröffentlichungsnummer: **0 000 375**
A1

# (12) EUROPÄISCHE PATENTANMELDUNG

(21) Anmeldenummer: 78100316.5

(22) Anmeldetag: 06.07.78

(51) Int. Cl.²: **A01G9/10, C08J9/00**

(30) Priorität: 16.07.77 DE 2732304

(43) Veröffentlichungstag der Anmeldung: 24.01.79
Patentblatt 79/2

(84) Benannte Vertragsstaaten: **BE CH FR GB LU NL**

(71) Anmelder: **Lormann, Wilfried, Natt 23, D-4054 Nettetal 1 (DE)**

(72) Erfinder: **Lormann, Wilfried, Natt 23, D-4054 Nettetal 1 (DE)**
**Lormann, Ernst, Schillerstrasse 17, D-4000 Düsseldorf (DE)**
**Lormann, Ingrid, Ikenstrasse 78, D-4000 Düsseldorf (DE)**

(74) Vertreter: **König, Reimar, Dr.-Ing. et al, Cecilienallee 76, D-4000 Düsseldorf (DE)**

(54) **Verwendung eines Schaumstoffes als Trägersubstanz für Pflanzen.**

(57) Bei der Anzucht von Pflanzen aus Stecklingen und Samen kommen die verschiedensten Trägersubstanzen zur Verwendung. Um eine ausreichende Beständigkeit, Festigkeit und ein günstiges Penetrationsverhalten zu gewährleisten und bei der Anzucht das Entstehen phytotoxischer Stoffe zu vermeiden, wird als Trägersubstanz zur Anzucht oder als Kultursubstrat ein ausgehärteter Harnstoff-Formaldehyd-Schaumstoff verwendet, dessen Eigenschaften wie Härte und Porenvolumen sich den jeweiligen Einsatzbedingungen entsprechend einstellen lassen.

EP 0 000 375 A1

Herr Wilfried Lormann, Natt 23, 4054 Nettetal 1

"Verwendung eines Schaumstoffes als Trägersubstanz für Pflanzen"

---

Die Erfindung betrifft die Verwendung eines Schaumstoffes als Trägersubstanz für Pflanzen, insbesondere zur Anzucht von Pflanzen aus Stecklingen und Samen.

Es ist bekannt, Harnstoff-Formaldehyd-Schaumstoffe in Form von Flocken als Bodenverbesserungsmittel und Substratkomponente einzusetzen. Die Wirksamkeit beschränkt sich dabei im wesentlichen auf einer besseren Durchlüftung des Bodens; außerdem wird durch diesen Zusatz eine Erhöhung der Wasserkapazität erzielt. Zur Aufrechterhaltung eines ausreichenden Nährstoffangebotes ist jedoch ein verstärktes Angebot an Mineralstoffdünger erforderlich.

Weiterhin ist es bekannt, daß die Verwendung von

- 2 -

Harnstoff-Formaldehyd-Schaumstoffen als Bodenverbesserungsmittel auch ungünstige Wirkungen auf die Pflanze ausüben kann. Beim Abbau des Schaumstoffes können phytotoxisches Formaldehyd entstehen; außerdem werden bei der Abbaureaktion die in der Schaumlösung notwendigerweise enthaltenen Tenside frei. Dabei handelt es sich zumeist um Alkylarylsulfonate, die gleichfalls eine ausgeprägte phytotoxische Wirkung besitzen. Ein weiterer Nachteil besteht darin, daß sich der Schaumstoff beim Dämpfen des Bodens zum Zwecke einer Sterilisation zersetzt und einen hohen Stickstoff-Überschuß hinterläßt.

Aus der deutschen Patentschrift 1 018 077 ist es weiterhin bekannt, einen Kunstharzschaumstoff auf der Basis eines Phenol-Melaminharzes als Kulturmaterial für den erdlosen Pflanzenanbau zu verwenden. Es hat sich jedoch gezeigt, daß dieser verhältnismäßig weiche Schaumstoff insofern Nachteile aufweist, als die Wurzeln nach Erreichen einer gewissen Höhe der Pflanze nicht mehr ausreichend fest im Pflanzblock gehalten werden. Beim Schwanken oder Biegen der Pflanzen besteht insbesondere beim Auspflanzen die Gefahr, daß die feinsten, äußersten Wurzeln des Wurzelballens aus- oder abreißen. Beim Abbau des Schaumstoffes entsteht außerdem äußerst phytotoxisches Phenol.

Ein anderer, zur Stecklings- und Samenvermehrung vorgeschlagener Phenolharzschaum zeichnet sich gegenüber den natürlichen Anzuchtmitteln durch ein wesentlich geringeres Raumgewicht, durch eine gute Einheitlichkeit sowie durch eine hohe Wirtschaftlichkeit aus. Darüber hinaus ermöglicht die Verwendung dieses Pro-

- 3 -

duktes als Anzuchtblock einen problemlosen Transport und Versand. Versuche haben jedoch ergeben, daß insbesondere bei zahlreichen Zierpflanzen der Anzucht- und Vermehrungserfolg gering ist. Die Wurzelbildung lag erheblich unter dem Durchschnitt im Vergleich zu der mit natürlichen Anzuchtmitteln erzielten; häufig war keinerlei Wurzel- oder Kallusbildung festzustellen.

Aus diesem Grunde wurden bisher überwiegend Torfe und Erdsubstrate als Anzuchtmittel eingesetzt. Diese natürlichen Anzuchtmittel weisen jedoch gleichfalls eine Reihe von Nachteilen auf. Aufgrund ihrer Herkunft enthalten sie mehr oder weniger bakterielle Verunreinigungen und insbesondere erhebliche Mengen Unkrautsamen. Demzufolge ist vor der Verwendung stets ein zeit- und kostenintensives Sterilisieren erforderlich. Danach muß das Material alsbald verarbeitet werden, um eine erneute Verunreinigung zu vermeiden. Der pH-Wert dieser Produkte ist nicht selten größeren Schwankungen unterworfen, was insbesondere bei der Anzucht von empfindlichen Pflanzen mitunter zu Schwierigkeiten führt.

Der Erfindung liegt daher die Aufgabe zugrunde, eine Trägersubstanz zur Anzucht von Pflanzen durch Stecklinge und Samen zu finden, die die genannten Nachteile nicht aufweist. Insbesondere soll die Substanz weitgehend abbauunfähig sein und keine phytotoxischen Stoffe bilden. Außerdem soll der Träger, beispielsweise in der Form eines Pflanzblocks, eine ausreichen-

- 4 -

de Festigkeit und Kompaktheit besitzen, damit er bei
der Handhabung und dem Transport nicht auseinanderfällt. Gleichzeitig darf er jedoch nicht zu dicht
sein, damit eine gute Entwicklung der Wurzeln gewährleistet ist.

Versuche haben nun ergeben, daß sich die genannten
Nachteile überraschenderweise vermeiden lassen, wenn
zur Anzucht oder auch als Kultursubstrat von Pflanzen
aus Stecklingen und Samen ein ausgehärteter Harnstoff-
Formaldehyd-Schaumstoff als Trägersubstanz verwendet
wird. Dabei lassen sich die Schaumstoffeigenschaften
der jeweiligen Einsatzbedingung entsprechend einstellen; so beispielsweise die Härte und das Porenvolumen,
das für die Wasser- und die Nährstoffaufnahme entscheidend ist. Der vorgeschlagene Schaumstoff besitzt
zudem den Vorteil, daß er ein niedriges Versandgewicht und eine ausgezeichnete Wasserbweglichkeit ohne
die Gefahr von zu Fäulnis führendem Stauwasser besitzt. Der vorgeschlagene Schaumstoff gewährleistet
zudem einen guten Feuchtigkeitsausgleich gegenüber
dem umgebenden Erdreich, was auf die gute Kapillarwirkung zurückzuführen ist. Dies steht im Gegensatz
zu Phenolharzblöcken, die nie ganz im Erdreich liegen
dürfen, um Fäulnis zu vermeiden. Schließlich läßt sich
der vorgeschlagene Schaumstoff für die Anzucht oder
auch als Hygrokultur aller Pflanzen verwenden.

Als besonders geeignet hat sich ein Harnstoff-Formaldehyd-Schaumstoff erwiesen, bei dem als Ausgangsstoff
ein reines und unmodifiziertes Harnstoff-Formaldehyd-
Kondensationsprodukt in wäßriger Lösung dient. Besonders geeignet als Ausgangsstoff ist eine wäßrige Lö-

- 5 -

sung eines Kondensationsproduktes mit einem Trockengehalt von 30 bis 40 %. Derartige Kondensationsprodukte dienten bislang in Verbindung mit Härtern überwiegend als Verleimungsmittel für die Sperrholz-, Möbel- und Spannplattenverarbeitung sowie als Wärme- und Schallschutz.

Diese Harnstoff-Formaldehyd-Schaumstoffe werden in der Weise hergestellt, daß ein reines, unmodifiziertes Harnstoff-Formaldehyd-Kondensationsprodukt in wäßriger Lösung unter Zugabe eines Schäummittels durch Einblasen komprimierter Luft aufgeschäumt und durch Einsprühen einer Säure, beispielsweise Phosphorsäure, gehärtet wird. Das spezifische Schaumgewicht beträgt 0,025 bis 0,125 g/cm$^3$, vorzugsweise 0,05 bis 0,075 g/cm$^3$. Anschließend erfolgt ein Neutralisieren durch Aufsprühen von Alkalien, beispielsweise Natronlauge. Das Produkt wird dann solange mit Wasser gespült, bis mit Sicherheit alle phytotoxischen Verbindungen ausgewaschen sind.

Die zu Blöcken oder Streifen geschnittenen Schaumstoffkörper weisen aufgrund ihrer Zellenformen eine große Aufnahmekapazität für Wasser auf. Sie sind völlig steril und genügend fest für einen Transport. Sie lassen sich beispielsweise nach einem Tränken mit Nährstoffen oder -salzen enthaltendem Wasser oder auch nährstofffrei unmittelbar zur Anzucht von Pflanzenstecklingen oder -samen nach üblichen Arbeitsweisen verwenden.

Selbstverständlich lassen sich auch zur Aufnahme von Samen Vertiefungen oder zur Aufnahme von Stecklingen

- 6 -

Sacklöcher in den Schaumstoff einarbeiten.

Versuche zur Stecklingsvermehrung mit 17 Zierpflanzen ergaben nach 14 bis 21 Tagen zu mehr als 31 % eine Kallusbildung und zu mehr als 60 % eine Wurzelbildung. Nur bei weniger als 8 % der Stecklinge unterblieb eine Wurzelbildung. Diese Ergebnisse zeigen die Überlegenheit der erfindungsgemäßen Trägersubstanz.

- 7 -

Herr Wilfried Lormann, Natt 23, 4054 Nettetal 1

P a t e n t a n s p r ü c h e :

1. Verwendung eines ausgehärteten Harnstoff-Formaldehyd-Schaumstoffes als Trägersubstanz für Pflanzen.

2. Verwendung eines ausgehärteten Harnstoff-Formaldehyd-Schaumstoffes als Trägersubstanz zur Anzucht
von Pflanzen aus Stecklingen und Samen.

3. Verwendung eines ausgehärteten Harnstoff-Formaldehyd-Schaumstoffes nach Anspruch 1 oder 2, bei dem
als Ausgangsstoff ein reines und unmodifiziertes
Harnstoff-Formaldehyd-Kondensationsprodukt in wäßriger Lösung dient.

4. Verwendung eines ausgehärteten Harnstoff-Formaldehyd-Schaumstoffes nach Anspruch 1, 2 oder 3 mit
einem Ausgangsstoff, der einen Trockengehalt von
30 bis 40 % und nach dem Schäumen ein spezifisches
Gewicht von 0,025 bis 0,125 g/cm$^3$ besitzt.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DX | <u>DE − B − 1 018 077</u> (H.SCHMIDT) <br> * Spalte 1, Zeile 36 bis Spalte 2, Zeile 44; Beispiel 1 * | 1−4 |
| | <u>FR − A − 2 289 469</u> (FISONS) <br> * Seite 1, Zeile 37 bis Seite 2, Zeile 3 * | 1−4 |
| | <u>DE − A − 1 949 462</u> (BAYER) <br> * Seite 4, Absatz 4 * | 1−4 |
| | <u>DE − A − 2 063 715</u> (BAYER) <br> * Seite 1, Absatz 3; Seite 2, Absatz 4 * | 1−4 |
| | <u>NL − A − 76 05617</u> (KOSAN A.S.) <br> * Seite 5, Zeilen 4-9, 27-36 * | 1−4 |

**KLASSIFIKATION DER ANMELDUNG (Int.Cl.²)**

A 01 G 9/10
C 08 J 9/00

**RECHERCHIERTE SACHGEBIETE (Int. Cl.²)**

A 01 G 9/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-10-1978 | COQUELIN |

EPA form 1503.1 06.78